# EUROPEAN PATENT APPLICATION

(11) **EP 4 394 533 A1**
(43) Date of publication of application: **03.07.2024**
(21) Application number: 22216855.1
(22) Date of filing: 28.12.2022
(51) Int. Cl.: G05B 19/4065, G05B 23/02

(54) **METHODS AND SYSTEMS FOR MONITORING A PROCESS OF MANUFACTURING A WORKPIECE BY A MACHINING TOOL**

(71) Applicant: Siemens Aktiengesellschaft, 80333 München (DE)
(72) Inventor: Aslan, Murat Samil, 97616 Bad Neustadt (DE); Köpken, Hans-Georg, 91056 Erlangen (DE); Regulin, Daniel, 82269 Geltendorf (DE)
(74) Representative: Siemens Patent Attorneys

(57) **Abstract**

A computer-aided method for monitoring a process of manufacturing a workpiece (16) by a machining tool (2), the method comprising:
- receiving (100) raw data representative of at least one process parameter,
- determining (101) a scaling parameter of the raw data,
- normalizing (102) the raw data based on the scaling parameter to produce normalized data,
- setting (103) a first threshold (T1) based on the normalized data,
- monitoring the manufacturing process based on the normalized data and on the first threshold (T1).

## Description

The subject-matter disclosed herein relates to methods and systems for monitoring a process of manufacturing a workpiece by a machining tool, in particular by a computer numerical control (CNC) machine.

The subject-matter disclosed herein also relates to a computer program and to a data carrier signal carrying such computer program.

A manufacturing, in particular a cutting process in a machine tool shall be monitored to detect quality issues and to allow longer usage of tools without risking quality issues. The goal is to detect both sudden deviations, e.g., caused by defects in the raw material or tool breakage, and slow changes, e.g., due to tool wear. Also, it should be easy to transfer monitoring rules from one machine to another machine.

Monitoring tools are known in the prior art, where a threshold is set around a trace of the monitored signal.

The thresholds are, however, depend highly on manufacturing conditions and on intrinsic properties of the machine tool. This leads to a necessity to set the thresholds generously or to methods that are prone to false alarm errors, if they are not reconfigured/-calibrated properly for each new process.

It is, therefore, desirable to provide methods and systems that allow for sensitive monitoring without false alarms.

This goal is achieved by the above-mentioned computer-aided method, said method comprising:
- receiving raw data representative of at least one process parameter,
- determining a scaling parameter of the raw data,
- normalizing the raw data based on the scaling parameter to produce normalized data,
- setting a first threshold based on / for the normalized data,
- monitoring the manufacturing process based on the normalized data and on the first threshold.

In particular the raw data is representative of temporal change of the at least one process parameter.

By normalizing the raw data based on the scaling parameter the scaling is compensated, i.e., the data becomes scale independent.

In an embodiment, one or more thresholds disclosed herein are time dependent.

With the method disclosed herein a monitoring is provided, which does not depend on the scaling.

In an embodiment, the at least one process parameter can be one of but not limited to a feed rate, a spindle speed, a spindle torque, a depth of cut, etc.

In an embodiment, said monitoring comprises producing a notification and/or an alarm (e-mail, text message, written inside a variable of an NC program, etc.), if the at least one threshold is reached.

In an embodiment, said monitoring comprises visualizing the normalized data and the first threshold. This can be of advantage in configuration/training phase and allows to set better threshold(s). In a production/monitoring phase the visualization can be deactivated and only thresholds are monitored.

In an embodiment, the method further comprises: monitoring the scaling parameter, in particular defining at least one scaling parameter threshold, e.g., to adapt any one or plurality of manufacturing, in particular cutting conditions, e.g., to trigger tool change, etc.

Therefore, additionally or instead of visualizing the normalized data the monitoring can comprise visualizing the scaling parameter.

In an embodiment, the method further comprises: setting a tolerance band for the normalized data and monitoring the manufacturing process using the tolerance band. In other words, the reaction (in the monitoring process) can depend on the size of the tolerance band only (and not on the scale of the trace / signal).

In an embodiment, the scaling parameter is determined by calculating a mean value, in particular a root mean square for the raw data.

In an embodiment, the scaling parameter is representative of one or more of cutting/machining conditions associated directly with an interaction between a tool and the workpiece, in particular of at least one property of a material batch (quality of raw material), a tool wear, a tool breakage, a presence of a cooling fluid, spindle speed, feed rate, cutting width and depth, etc.

In an embodiment, the method further comprises: determining an offset in the raw data. Machine specific offset on the signal can be due to idle torque or motor model inaccuracies. It can be determined from a non-cutting range/part of the signal.

In an embodiment, the offset is representative a type and/or a quality of a spindle and/or of a type of the machine tool.

In an embodiment, the method further comprises: monitoring the offset.

In an embodiment, said monitoring comprising visualizing the offset.

In an embodiment, a sequence of offset values can be monitored both in terms of the actual value and in terms of its change from workpiece to workpiece (or even from operation to operation if, e.g., the spindle speed is the same). On the same machine, only small changes caused by temperature changes would be expected, or a small and slow drift of the values due to wear of the spindle. Sudden changes would indicate a problem with the spindle. There may be a larger difference in the offset between different machines.

In an embodiment, when two or more workpieces are manufactured, a sequence of normalization factors for consecutive workpieces for operations with the same tool both the actual value can be monitored (e.g., with min/max limits) and the change between adjacent values can be monitored as well. A large change in the signal might occur after a tool change or a material batch change. Otherwise, it indicates a potential quality issue.

In summary, the signal (raw data) can be normalized in a special way. The beginning of the trace (signal) that corresponds to non-cutting conditions can be used for the offset and/or the "un-scaling" can be done by the mean or root mean squared or maximum value of the signal, e.g., after offset compensation. Also, the offset and normalization factor can be used for monitoring in addition to the normalized trace.

Defining scale and/or offset such that they correspond to important aspects of machining and by monitoring these quantities in addition to the shape of the trace, tool and material information can be extracted and monitored, transfer to a new machine is simplified and a more accurate shape monitoring can be achieved.

According to another aspect of the subject-matter disclosed herein, a computer program is provided comprising instructions which, when the program is executed by a computing system, cause the computing system to carry out a method described above.

According to another aspect of the subject-matter disclosed herein, the above-mentioned system comprises
- a memory that stores machine-executable components, and
- a processor that is operatively coupled to the memory and is configured to execute the machine-executable components, wherein said machine-executable components comprise the above-mentioned computer program.

In an embodiment, the system is adapted to be operatively coupled to a machining tool, e.g., a CNC machine to influence and/or adjust a process of manufacturing a workpiece, said process being carried out by the machining tool.

According to another aspect of the subject-matter disclosed herein, a data carrier signal carrying the above-mentioned computer program is provided.

It will be appreciated by the skilled person that the raw data can be representative of two or more process parameters. For each of the parameters the normalization procedure can be carried out as well as the visualization.

The above and other aspects and advantages of the subject matter disclosed herein will be further discussed in conjunction with the accompanying drawings, which indicate only some possible ways that may be practiced. The like reference characters in the drawings refer to like parts throughout.
- FIG 1: shows a system for machining,
- FIG 2: illustrates monitoring a spindle torque signal,
- FIG 3: shows a flow-chart diagram of a method for monitoring a process of manufacturing a workpiece by a machining tool.

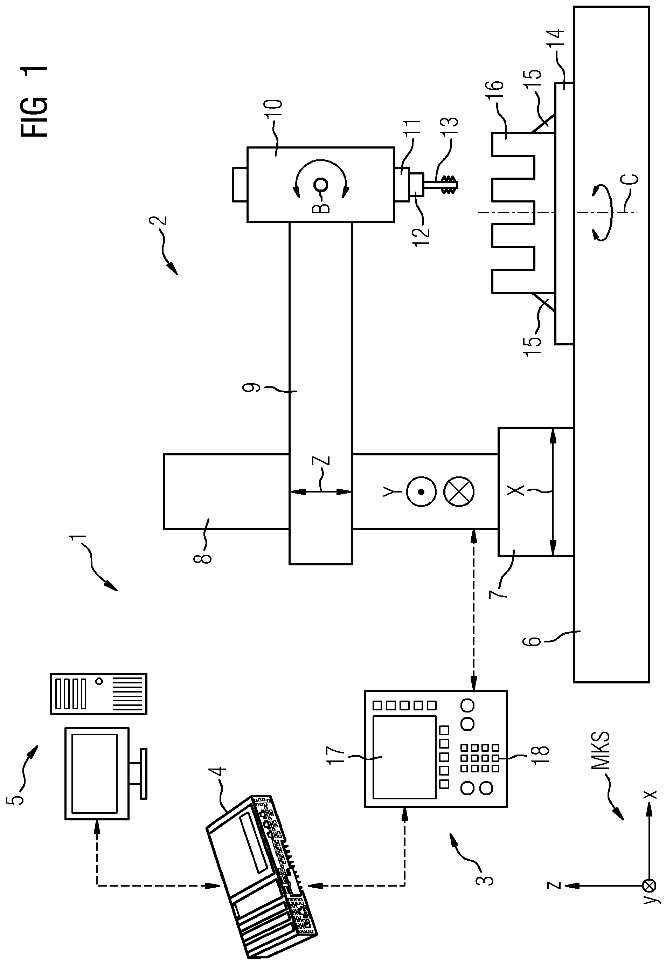

FIG 1 illustrates a system 1 for machining. The system comprises a machining tool designed as a CNC machine 2, a CNC control device 3, said control device 3 being coupled to the CNC machine 2, an edge device 4, and a computing system 5.

The control device 3, the edge device 4, and the computing system 5 are adapted to be data-connected with each other. The data connection can be over one or more networks. E.g., the data connection between the control device 3 and the edge device 4 can be over an internal network, intranet (via LAN or WLAN). The data connection between the edge device 4 and the computing system 5 can be over an external connection, e.g., over the Internet.

In an embodiment, the computing system 5 is a cloud computing system, e.g., a server in the cloud.

The edge device 4 can be designed as an industrial PC. One of functionalities of the edge device 4 is to collect process data from the machine tool 2. In an embodiment, the edge device can be configured to perform some (pre-)processing of the collected process data. Quite often, however, the data analysis is performed by a system that have more computational resources than the edge device 4, e.g., by the computing system 5.

The machine tool 2 shown has three position-controlled linear axes X, Y and Z, whereby a first support element 7 is adjustable in the x-direction, a second support element 8 in the y-direction and a third support element 9 in the z-direction with respect to a machine coordinate system MKS which is stationary relative to the machine tool 2.

The first supporting element 7 is carried by a stationary machine stand 6 via a linear drive (not shown) that can be adjusted in the x-direction, the second supporting element 8 is carried by the first supporting element 7 via a linear drive (not shown) that can be adjusted in the y-direction, and the third supporting element 9 is carried by the second supporting element 8 via a linear drive (not shown) that can be adjusted in the z-direction.

The third supporting element 9 carries a spindle drive 10, which can be pivoted about a position-controlled rotary axis B, said rotary axis B being parallel to the Y-axis. The spindle drive 10 has a tool spindle 11 which is rotatable about a spindle axis (not shown), is speed- and/or position-controlled and in which a tool holder 12 is clamped. A tool 13 is attached to the tool holder 12.

Furthermore, the machine tool 2 may comprise a position-controlled tool table axis C, which is aligned parallel to the Z axis and about which a workpiece table 14 can be rotated.

The tool table 14 is carried by the stationary machine stand 6 and a workpiece 16 is attached to the tool table 14 by means of tool holders 15.

According to the embodiment, the machine tool 2 can have five position-controlled machine axes by means of which a relative movement between the tool 13, e.g., a milling tool, such as a milling cutter, and the workpiece 16 can be carried out. This is therefore a so-called 5-axis machine tool (5-axis machine), whereby it should be noted at this point that a machine tool can of course also have more, but also less than five machine axes. The drives of the position-controlled machine axes have not been shown in the embodiment example for the sake of clarity.

The CNC machine 2 is connected to the CNC control device 3, which, e.g., determines movement setpoints for the machine axes on the basis of a part program and/or a manual operating input for controlling a relative movement taking place between the tool 13 and the workpiece 16. In particular the CNC control device 3 can determine the movement setpoints on the basis of the part program, in which the movements to be performed by the tool 13 relative to the workpiece 16 are defined in the form of commands or program instructions, usually in the form of G code.

Alternatively, or additionally, the movement of the tool 13 and/or the workpiece 16 can also be specified by an operator on site at the machine tool 2 by means of a manual input via an operating device with operating elements 18 in conjunction with a display device in the form of a display 17 of the CNC control 3. The operating elements 18 comprise in particular pushbuttons, or rotary controls. Advantageously, the display 17 can also be designed as a touch screen and thus also as an operating element.

In addition to the pure position setpoints, the numerical control device can also be used to determine or set variables relating to the dynamics of the relative movement or the individual axes, in particular the speed, acceleration or jerk.

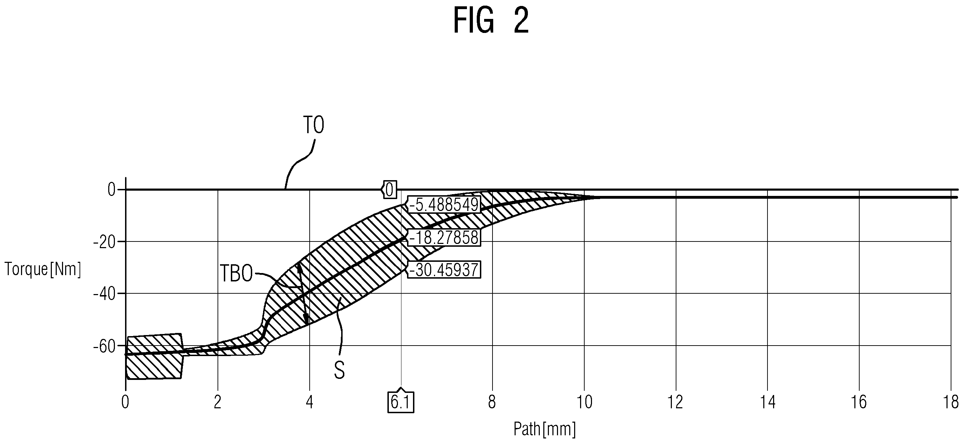

An example of data analysis performed by the computing system 5 on a process data collected by the edge device 4 is illustrated on FIG 2.

FIG 2 illustrates monitoring and visualizing a torque (in newton-meters) of a spindle (one of a plurality process parameters), e.g., of the spindle 11 depending on the path (in millimeters).

The visualization can take place on a display device of the computing system 5. E.g., FIG 2 can be a screen shot from an interface of a computer program running on the computing device 5 to analyze the process data.

The solid line S represents values, e.g., measured values of the spindle torque, in particular a torque command of the main spindle.

Around the solid line there is a tolerance band TB0, i.e., an area between two threshold values "TorqueMax" and "TorqueMin". The thresholds "TorqueMax" and "TorqueMin" can be time/path dependent.

If the signal S exceeds one of the threshold values "TorqueMax" and "TorqueMin" a corresponding message can be issued signaling that the signal S is not within the range of its normal values.

The message can have various designs. FIG 2 shows one possible realization of such message. It is represented by a straight T0 line, preferably of a color which is different from the color of the visualization of the signal S, so that it can be easily noticed by a user. The line can be situated on different positions on the y-axis. In the present case the line is at y=0 meaning that there is no anomaly and that the signal S stays within the tolerance band TB0. Should the signal exceed one of the thresholds "TorqueMax" and "TorqueMin" the line can "jump" to y=1 or 2 or to some other value indicating how strong the violation of the threshold is.

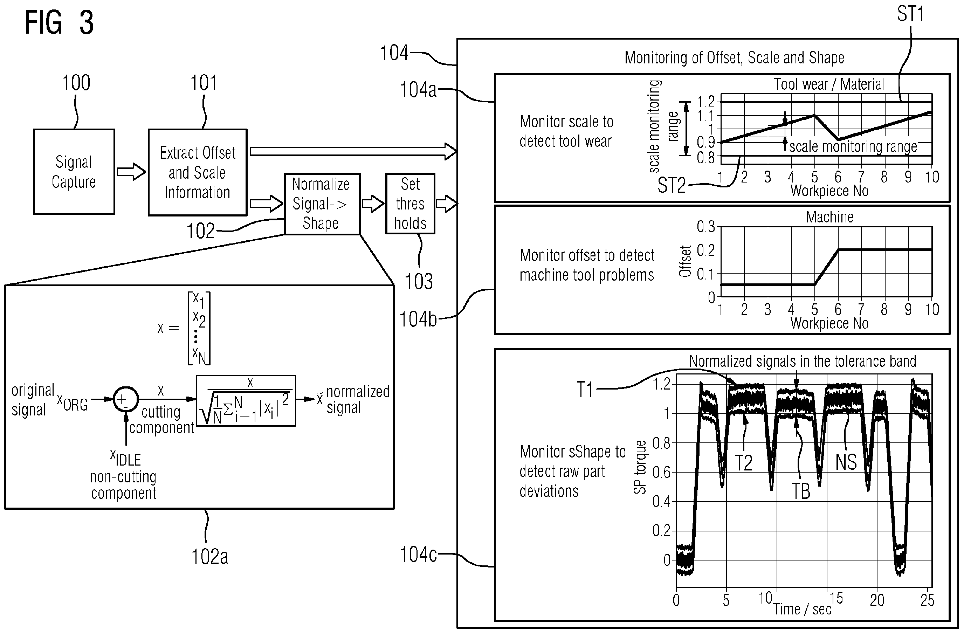

FIG 3 shows a flow diagram representing a computer-aided method for monitoring a process of manufacturing a workpiece, e.g., the workpiece 16 by a machining tool, e.g., by the CNC machine 2. The method can be carried out by any computing system, e.g., by the computing system 5.

In an embodiment, the computing system 5 is adapted to be operatively coupled to the CNC machine 2 to influence and/or adjust a process of manufacturing the workpiece 16.

In an embodiment, the computing system 5 can trigger and/or halt a process of capturing a signal 100. The time for triggering and/or halting the signal capturing process can correspond to one or more predetermined process steps, e.g., to certain single machining operations or sequences thereof, e.g., cutting, milling, drilling, etc.

The captured signal is a raw data representative of at least one process parameter, e.g., of the spindle torque as shown in FIG 2. The raw data can be collected by the edge device 4. It can be pooled there for a predetermined amount of time.

It will be appreciated that the subject-matter disclosed herein is not limited to the spindle torque. Other process parameters, e.g., feed rate, spindle speed, depth of cut, etc. can be captured, monitored and visualized as described herein.

The signal can be in form of a time series, i.e., representative of temporal change of the process parameter.

For the captured time series, a scaling parameter is determined 101.

In an embodiment, the scaling parameter can be determined by calculating a mean value, in particular a root mean square - RMS - for the raw data.

The scaling parameter can be representative / dependent of / on at least one property of a material batch, e.g., quality of raw material, and/or a tool wear and/or a tool breakage. Moreover, the scaling parameter can depend on a presence of lubricate or of a cooling fluid. In general, the scaling parameter can depend on one or more of machining conditions associated directly with an interaction between a tool 13 and the workpiece 16. In particular the scaling parameter depends on at least one cutting conditions, e.g., spindle speed, feed rate, cutting width and depth, etc.

Therefore, it can be useful to monitor the scaling parameter 104a throughout the manufacturing process. In particular, a tolerance corridor can be defined for the scaling parameter, said corridor lying between two scaling parameter thresholds threshold ST1, ST2.

If, e.g., the scaling parameter exceeds one of the scaling parameter thresholds ST1, ST2 a change / adaption of one or more above-mentioned machining conditions can be triggered. E.g., exchanging a tool 13, checking the cooling fluid, checking the operation mode for an override, etc. can be recommended.

In an embodiment, the scaling parameter can be visualized.

FIG 3 illustrates, for example, that monitoring and, in particular, visualizing the scaling parameter can provide additional information regarding the wear of the tool 13.

In an embodiment, further (statistical) parameters of the data can be determined 101. E.g., it can be useful to determine an offset in the raw data.

The offset can be representative of a type and/or a quality of a spindle 11 and/or of a type of the machine tool 2.

Therefore, it can be useful to monitor the offset parameter 104b throughout the manufacturing process.

Visualizing the offset can provide information on general machine tool problems (or extreme workpiece deviations that cause unexpected cutting in the reference section of the trace) and help to detect them.

E.g., FIG 3 illustrates monitoring and visualizing the scaling parameter and the offset depending on the number of manufactured workpieces. It will be appreciated that the monitoring and visualizing the scaling and the offset can be performed in other time intervals, e.g., after each predetermined machining sequence, etc.

After determining the scaling parameter and, optionally, one or more other statistical parameters, e.g., the offset, the signal is normalized 102 and normalized data is generated. In other words, the normalized data is a raw data in which the scaling and, optionally, other parameters, e.g., the offset are compensated.

In an embodiment, the signal can be compensated as follows 102a. First a non-cutting component X_{IDLE} is subtracted from the original signal X_{ORG}, so that only a cutting component X= [X₁, X₂,..., X_{N}] is left. This can be performed, e.g., by using the offset information. Subsequently, the cutting component X is normalized by using the scaling information.

The normalized data is now representative only of the dynamic properties of the manufacturing process, i.e., it does not depend, e.g., on the tool 13 wear and/or on the general properties of the machine tool 2.

For this normalized data thresholds T1, T2 can be set 103. In an embodiment, a tolerance band TB, confined by the thresholds T1, T2 can be formed around the normalized signal NS and the manufacturing process can be monitoring by using the tolerance/monitoring band TB.

With the thresholds set, the normalized signal NS can be monitored 104c. In this way a sensitive monitoring without false alarms can be achieved, because the normalized signal NS is not sensitive to the tool wear and/or other changes in the machining tool. In particular, no alarms will be produced, if, e.g., the tool wear increases but stays within a permissible range.

In an embodiment, the shape 104c of the normalized signal NS, the scaling 104a and the offset 104b can be monitored and, optionally, visualized at the same time 104. In an embodiment, a user interface related to offset 104b, scale 104a and shape 104c showing both how it is calculated and how it is monitored can be provided.

In an embodiment, the monitoring comprises producing a notification or an alarm, if one of the thresholds T1, T2 is reached by the tolerance band TB. Notifications or alarms can be in form but not limited to any electronic notification e-mail, push message, text message, a message written inside a variable of an NC program, sound and/or visual signals etc.

After the monitoring band TB is set for one normalized signal (in FIG 3: spindle torque) it can be used for normalized signals of the same type (in FIG 3: spindle torque) from another manufacturing process on a different machine tool providing a broader applicability of the results and avoiding false alarms with higher precision and without any reconfiguration.

It will be appreciated by the skilled person that the raw data can be synthetic raw data resulting from a NC program-based simulation.

Further anomalies can be detected via the normalized shape NS without retraining/reconfiguring for a new tool or a new material batch. E.g., these are wrong raw part insertion (wrong type, wrong orientation, wrong position, etc.), raw part anomalies (e.g., cavities, blowholes, etc.), tool brake during operation.

Another advantage is that a smaller tolerance window for scale change, which is possible due to the normalization of the data, makes tool problem detection more sensitive. To avoid false alarms even more effectively information when new tool or new material can be used.

The above-described embodiments of the present disclosure are presented for purposes of illustration and not of limitation.

In particular, the embodiments described with regard to figures are only few examples of the embodiments described in the introductory part. Technical features that are described with regard to systems can be applied to augment methods disclosed herein and *vice versa.*

## Claims

1. A computer-aided method for monitoring a process of manufacturing a workpiece (16) by a machining tool (2), the method comprising:
- receiving (100) raw data representative of at least one process parameter,
- determining (101) a scaling parameter of the raw data,
- normalizing (102) the raw data based on the scaling parameter to produce normalized data,
- setting (103) a first threshold (T1) based on the normalized data,
- monitoring the manufacturing process based on the normalized data and on the first threshold (T1).

2. Method of Claim 1, wherein the at least one process parameter is feed rate, spindle speed, spindle torque, or depth of cut.

3. Method of Claim 1 or 2, wherein said monitoring comprises producing a notification, if the at least one threshold (T) is reached.

4. Method of any one of Claims 1 to 3, wherein said monitoring comprises visualizing the normalized data and the first threshold (T1).

5. Method of any one of Claims 1 to 4, further comprising: monitoring (104a) the scaling parameter, in particular defining at least one scaling parameter threshold (ST1, ST2).

6. Method of Claim 5, wherein said monitoring comprising visualizing the scaling parameter.

7. Method of any one of Claims 1 to 6, further comprising: setting a second threshold (T2), wherein the first threshold (T1) and the second threshold (T2) form a tolerance band (TB) for the normalized data and monitoring the manufacturing process using the tolerance band (TB).

8. Method of any one of Claims 1 to 7, wherein the scaling parameter is determined by calculating a mean value, in particular a root mean square for the raw data.

9. Method of any one of Claims 1 to 8, wherein the scaling parameter is representative of one or more of machining conditions associated directly with an interaction between a tool (13) and the workpiece (16), in particular of at least one property of a material batch (quality of raw material), a tool wear, a tool breakage, a presence of a cooling fluid, spindle speed, feed rate, cutting width and depth.

10. Method of any one of Claims 1 to 9, further comprising: determining an offset in the raw data.

11. Method of Claim 10, wherein the offset is representative a type and/or a quality of a spindle and/or of a type of the machine tool.

12. A computer program comprising instructions which, when the program is executed by a computing system, cause the computing system to carry out a method of any one of Claims 1 to 11.

13. A data carrier signal carrying the computer program of claim 12.

14. A system for monitoring a manufacturing process, the system comprises
- a memory that stores machine-executable components, and
- a processor that is operatively coupled to the memory and is configured to execute the machine-executable components, wherein said machine-executable components comprise a computer program of Claim 12.

15. System of Claim 14, wherein the system is adapted to be operatively coupled to a machining tool (2) to influence and/or adjust a process of manufacturing a workpiece (16), said process being carried out by the machining tool (2).
